# EUROPEAN PATENT SPECIFICATION

(11) **EP 0 775 032 B1**
(45) Date of publication and mention of the grant of the patent: **15.04.1998**
(21) Application number: 95926239.5
(22) Date of filing: 12.07.1995
(51) Int. Cl.: B23B 27/14

(54) **AN INDEXABLE INSERT**
EIN WENDESCHNEIDEINSATZ
PLAQUETTE AMOVIBLE

(30) Priority: 11.08.1994 DE 4428514
(43) Date of publication of application: 28.05.1997
(73) Proprietor: KENNAMETAL INC., Latrobe, PA 15650 (US)
(72) Inventor: ZITZLAFF, Wolfgang, D-6367 Karbeu 3 (DE); SCHUTZ, Edgar, D-5439 Fehl-Ritzenhausen (DE)
(74) Representative: Schwepfinger, Karl-Heinz, Dipl.-Ing.
(86) International application number: US9508669
(87) International publication number: WO9605009

(56) References cited:
- EP-A- 0 143 758
- US-A- 4 214 846

## Description

### BACKGROUND OF THE INVENTION

The invention relates to an indexable insert having two parallel cutting edges formed on opposite sides of an indexable insert body at the same level, between which a top surface is provided with a chipbreaking structure formed by projections and recesses. An insert of this kind is known e.g. from EP-A-0143758.

Indexable inserts exist in various different basic forms and in numerous customised designs, which by dint of their geometry and composition are adapted for different purposes and materials to be machined.

### SUMMARY OF THE INVENTION

The invention makes available an indexable insert which is amenable to use in high performance applications while at the same time producing short, smooth and readily controlled chips at a lower power requirement.

In the indexable insert in accordance with the invention, the mutually alternating projections and recesses of the chipbreaking structure define a continuous undulating line, the crests of such undulating line rising above the cutting edges and the troughs being below the cutting edges; in a section athwart the center line the top surface has extending inward from each cutting edge part, a descending top surface part, which rises toward the center line and merges with the chipbreaking structure. Preferably, the chipbreaking structure is defined by a row of at least generally part-spherical chipbreaking bodies, said row being parallel to the cutting edges and being centered about the center line with concave chip guiding faces being formed between the said bodies.

Further advantageous developments and convenient forms of the invention will be understood from the following detailed descriptive disclosure in conjunction with the drawings.

### BRIEF DESCRIPTION OF THE DRAWINGS

Figure 1 is a diagrammatic perspective representation of the indexable insert, whose top surface is indicated by intersecting grid lines.

Figure 2 is a plan view of the indexable insert.

Figure 3 is a sectional view taken on the line III in Figure 2.

Figure 4 is a partially sectioned side elevation of one cutting edge of the indexable insert.

### DETAILED DESCRIPTION OF THE INVENTION

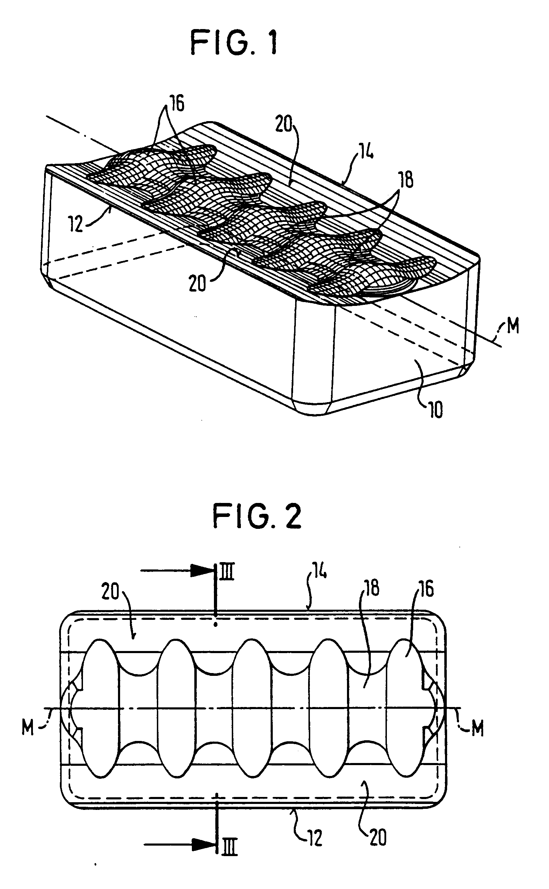

The indexable insert illustrated in Figure 1 comprises an indexable insert body 10 of a generally rectangular block having a flat base surface, four side surfaces extending perpendicularly to such base surface and a top surface, which possesses inwardly descending top surface parts and a chipbreaking structure arranged along the center line M of the indexable insert body 10. Two cutting edges 12 and 14 are formed at the same level and are parallel to one another between the top surface and the two longer side surfaces.

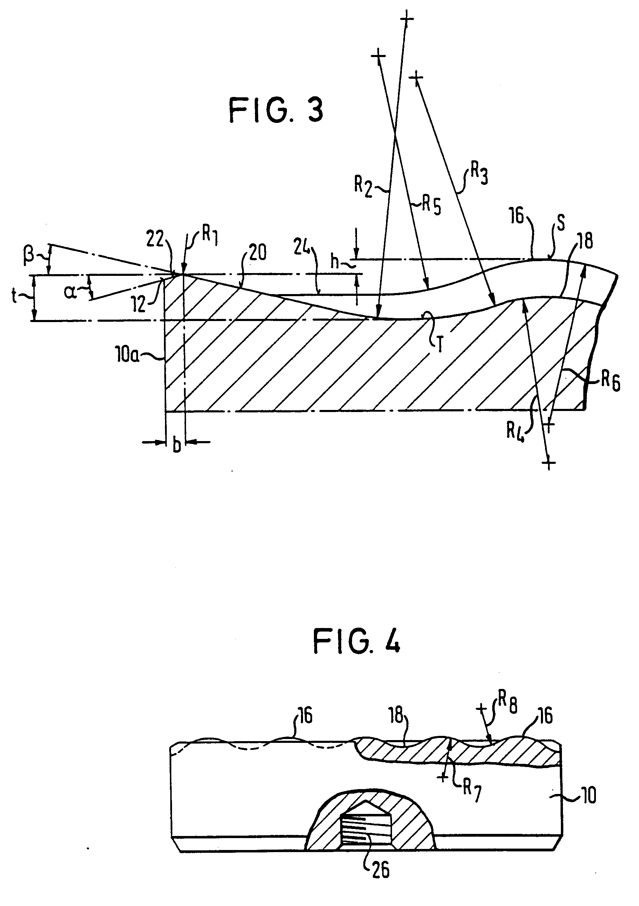

The chipbreaking structure comprises generally part-spherical projections 16 in a row centered on the center line M of the cover surface, such projections alternating with concave recesses. As seen in a section along the center line M, the projection 16 and the recesses 18, and as apparent from Figure 4, define a continuous undulating line, whose crests rise above the cutting edges 12 and 14 and whose troughs are lower than such cutting edges 12 and 14. As seen in a section athwart such center line M, the top surface respectively has, extending inward from a cutting edge part in the direction of the center line M, a descending top surface part 20, which, rising again toward the center line M, merges with the projections 16 and the recesses 18.

In the case of the preferred embodiment, which is depicted in Figures 3 and 4 with the main geometrical characteristics, the clearance angle at the side surface 10a is 0°. At the cutting edge 12 there is a rising cutting edge land 22, which has a negative rake angle α of approximately 15°. The cutting edge land 22 is radiused to merge with a flat part of the descending top surface part 20. This radiused zone has a radius R₁ of less than 1 mm, as for instance, 0.8 mm. The width b of the cutting edge land 22 is less than 1 mm and amounts to, for example, 0.6 mm. The flat part of the descending top surface 20 possesses a positive rake angle β of approximately 14°.

In Figure 3 the section is taken through the lowest point T of one of the recesses 18. The descending top surface part 20 merges with a slight curvature, which has a radius R₂ of, for example 10 mm, with the lowest point T thereof. Following this, there is an ascent with a somewhat smaller radius R₃ of curvature of, for instance, 8 mm, which merges with a convex part of the recess 18, whose radius R₄ of curvature is less and, for example, amounts to 5.5 mm.

Considered again in a direction athwart the center line M but through one of the projections 16, there is a form which in principle is similar, but at a greater height. The descending top surface part 20 merges here with a flat intermediate part 24, which is adjoined, in an inward direction toward the center line M, by a concavely rising part with a radius R₅, which may be the same as the radius R₅ and, for example, amounts to 8 mm. This concavely ascending part finally runs into a convex apical part, whose radius R₆ of curvature is somewhat less than the radius R₄ of curvature and, for instance, amounts to 6 mm.

As related to the lowest point T, the flat intermediate part 24 of the top surface is approximately half way up in relation to the common plane of the cutting edges 12 and 14. The apical point S of the projection 16 extends by an amount h past the level of the cutting edges 12 and 14; this amount h is equal to approximately 1/3 (33%) of the amount 5, by which the lowest point T is lower than the height of the cutting edges 12 and 14. This amount t is equal to, for example, 1.5 mm so that h is equal to approximately 0.5 mm. Furthermore, the reader will see from Figure 3 that the crest of the convex part of the recesses 18 is generally at the crest of the convex part of the recesses 18 is generally at the same level as the flat intermediate part 24.

The undulating line indicated in Figure 4, which is defined by the projections 16 and the recesses 18 along the center line M, consists of alternating convex circular arc sections with a radius R₇ of, for instance, 5.5 mm and concave circular arc sections with a somewhat smaller radius R₈ of approximately 5 mm.

Furthermore, Figure 4 will be seen to indicate one of several threaded holes 26, which extend perpendicularly through the base surface of the indexable insert body 10 and serve for attachment of the indexable insert on a cutting tool.

The indexable insert is manufactured from conventional sintered carbide material. It is suitable for use in high performance applications. The projections 16 act as chipbreaking bodies, which in conjunction with the recesses 18 placed in between, serve to ensure the production of short, smooth chips without furrows and marginal tears. All in all, the flow of chips may be readily controlled. The chipbreaking structure does not involve providing additional drive power and, owing to the even flow of chips, the indexable insert has a long working life.

## Claims

1. An indexable insert having two parallel cutting edges (12, 14) formed on opposite sides of an indexable insert body at the same level, between which a top surface is provided with a chipbreaking structure formed by projections and recesses, characterized in that as considered in a section along a center line (M) parallel to the cutting edges the mutually alternating projections (16) and recesses (18) define a continuous undulating line (M), the crests (S) of such undulating line rising above the cutting edges (12, 14) and the troughs being below the cutting edges (12, 14) and in that in a section athwart center line (M) the top surface descending top surface parts (20) extending inward from each cutting edge part which, rising toward the center line (M), merge with the chipbreaking structure.

2. The indexable insert as claimed in claim 1, characterized in that as seen in a section athwart the center line (M) and through the crest (S) of a projection (14), the top surface has, adjoining the indexable insert part, a flat descending top surface part (20), then next in an inward direction a flat intermediate part (24) remaining generally at the same level, which intermediate part (24) merges with an arcuately rising initial part of a projection (16).

3. The indexable insert a claimed in claim 2, characterized in that each arcuately rising part is made up of a concave circular arc section and an inwardly adjoining convex circular arc section.

4. The indexable insert as claimed in claim 3, characterized in that the concave circular arc section possesses a substantially larger radius (R₅) than the convex circular arc section (R₆).

5. The indexable insert as claimed in claim 1, characterized in that as considered athwart the center line (M) and generally in the middle between two adjacent projections (16), the top surface parts possess a flat descending surface part (20), which merges into an arcuate trough part descending to a lowest point (T) and then ascending again.

6. The indexable insert as claimed in claim 5, characterized in that each arcuate trough part comprises a concave circular arc section and an inwardly adjoining convex circular arc section.

7. The indexable insert as claimed in claim 6, characterized in that the concave circular arc section possesses a substantially larger radius (R₂) than the convex circular arc section (R₄).

8. The indexable insert as claimed in claim 1, characterized in that between each cutting edge (12, 14) and a descending top surface part (20) an ascending cutting edge land (22) is formed.

9. The indexable insert as claimed in claim 1, characterized in that the continuous undulating line is composed of alternating convex and concave circular arc sections.

10. The indexable insert as claimed in claim 9, characterized in that the radius (R₇) of the convex circular arc sections is approximately 10% larger than that (R₈) of the concave circular arc sections.

11. The indexable insert as claimed in claim 1, characterized in that the cutting edge land (22) has a negative rake angle (a) of approximately 15°.

12. The indexable insert as claimed in claims 1, characterized in that the cutting edge land (22) is circularly radiused to merge with the top surface.

13. The indexable insert as claimed in claim 12, characterized in that the part radiused as a circular arc has a radius (R₁) of approximately 0.8 mm.

14. The indexable insert as claimed in claim 1, characterized in that the flat top surface part (20) has a positive rake angle (β) of approximately 14°.

15. The indexable insert as claimed in claim 2, characterized in that the lowest point (T) of the descending surface part (20) is approximately twice as far down below the level of the cutting edge (12, 14) as the flat intermediate part (24).

16. The indexable insert as claimed in claim 15, characterized in that the crest of the arcuate trough part extends to approximately the level of the flat intermediate part (24).

17. The indexable insert as claimed in claim 5, characterized in that the crests of the undulating lines extend by approximately 33% of the depth (t) of the lowest point (T) of the top surface below the level of the cutting edge (12, 14), above such level.

18. The indexable insert as claimed in claim 1, characterized in that the chip breaking structure possesses a row of at least generally part-spherical chipbreaking bodies, said row being arranged parallel to the cutting edges and centered on the center line (M), between which bodies concave chip guiding surfaces are formed.

## Patentansprüche

1. Wendeschneidplatte mit zwei an einander gegenüberliegenden Seiten eines Schneidplattenkörpers auf gleicher Höhe gebildeten, parallelen Schneidkanten (12, 14), zwischen denen eine Oberfläche mit einer aus Erhebungen und Vertiefungen gebildeten Spanbrecherstruktur gelegen ist, dadurch gekennzeichnet, daß im Schnitt entlang einer Mittellinie (M) parallel zu den Schneidkanten die miteinander alternierenden Erhebungen (16) und Vertiefungen (18) eine durchgehende Wellenlinie (M) definieren, deren Scheitel (S) sich über die Schneidkanten (12, 14) erheben und deren Täler tiefer als die Schneidkanten (12, 14) liegen, und daß im Schnitt quer zur Mittellinie (M) die Oberfläche jeweils vom Schneidkantenbereich ausgehend einwärts absinkende Oberflächenbereiche (20) aufweist, die zur Mittellinie (M) hin wieder ansteigend in die Spanbrecherstruktur übergehen.

2. Wendeschneidplatte nach Anspruch 1, dadurch gekennzeichnet, daß die Oberfläche im Schnitt quer zur Mittellinie (M) und durch den Scheitel (S) einer Erhebung (16) an den Schneidkantenbereich anschließend einen ebenen abfallenden Oberflächenbereich (20), dann einwärts anschließend einen annähernd auf gleicher Höhe verbleibenden ebenen Zwischenbereich (24) aufweist, der in einen bogenförmig ansteigenden Anfangsbereich einer Erhebung (16) übergeht.

3. Wendeschneidplatte nach Anspruch 2, dadurch gekennzeichnet, daß der bogenförmig ansteigende Bereich jeweils aus einem konkaven Kreisbogenabschnitt und einem einwärts daran anschließenden konvexen Kreisbogenabschnitt zusammengesetzt ist.

4. Wendeschneidplatte nach Anspruch 3, dadurch gekennzeichnet, daß der konkave Kreisbogenabschnitt einen wesentlich größeren Radius (R₅) als der konvexe Kreisbogenabschnitt (R₆) aufweist.

5. Wendeschneidplatte nach Anspruch 1, dadurch gekennzeichnet, daß die Oberflächen im Schnitt quer zur Mittellinie (M) und etwa mittig zwischen zwei benachbarten Erhebungen (16) einen ebenen abfallenden Flächenbereich (20) aufweisen, der in einen bis zu einem Tiefstpunkt (T) abfallenden und anschließend wieder ansteigenden, bogenförmigen Talbereich übergeht.

6. Wendeschneidplatte nach Anspruch 5, dadurch gekennzeichnet, daß der bogenförmige Talbereich jeweils aus einem konkaven Kreisbogenabschnitt und einem einwärts daran anschließenden konvexen Kreisbogenabschnitt zusammengesetzt ist.

7. Wendeschneidplatte nach Anspruch 6, dadurch gekennzeichnet, daß der konkave Kreisbogenabschnitt einen wesentlich größeren Radius (R₂) als der konvexe Kreisbogenabschnitt (R₄) aufweist.

8. Wendeschneidplatte nach Anspruch 1, dadurch gekennzeichnet, daß zwischen der Schneidkante (12, 14) und einem absinkenden Oberflächenbereich (20) jeweils eine ansteigende Schneidkantenfase (22) gebildet ist.

9. Wendeschneidplatte nach Anspruch 1, dadurch gekennzeichnet, daß die durchgehende Wellenlinie aus abwechselnd konvexen und konkaven Kreisbogenabschnitten zusammengesetzt ist.

10. Wendeschneidplatte nach Anspruch 9, dadurch gekennzeichnet, daß der Radius (R₇) der konvexen Kreisbogenabschnitte etwa 10 % größer ist als der (R₈) der konkaven Kreisbogenabschnitte.

11. Wendeschneidplatte nach Anspruch 1, dadurch gekennzeichnet, daß die Schneidkantenfase (22) einen negativen Spanwinkel (α) von etwa 15° aufweist.

12. Wendeschneidplatte nach Anspruch 1, dadurch gekennzeichnet, daß die Schneidkantenfase (22) mit einer kreisbogenförmigen Verrundung in die Oberfläche übergeht.

13. Wendeschneidplatte nach Anspruch 12, dadurch gekennzeichnet, daß die kreisbogenförmige Verrundung einen Radius (R₁) von etwa 0,8 mm aufweist.

14. Wendeschneidplatte nach Anspruch 1, dadurch gekennzeichnet, daß der ebene Oberflächenbereich (20) einen positiven Spanwinkel (β) von etwa 14° aufweist.

15. Wendeschneidplatte nach Anspruch 2, dadurch gekennzeichnet, daß der Tiefstpunkt (T) des abfallenden Flächenbereiches (20) etwa doppelt so tief unter der Höhe der Schneidkante (12, 14) gelegen ist wie der ebene Zwischenbereich (24).

16. Wendeschneidplatte nach Anspruch 15, dadurch gekennzeichnet, daß der Scheitel des bogenförmigen Talbereiches etwa die Höhe des ebenen Zwischenbereiches (24) erreicht.

17. Wendeschneidplatte nach Anspruch 5, dadurch gekennzeichnet, daß die Scheitel der Wellenlinien um etwa 33 % der Tiefe (t) des Tiefstpunktes (T) der Oberfläche unter der Höhe der Schneidkante (12, 14) über diese Höhe hinausragen.

18. Wendeschneidplatte nach Anspruch 1, dadurch gekennzeichnet, daß die Spanbrecherstruktur eine parallel zu den Schneidkanten angeordnete, auf die Mittellinie (M) zentrierte Reihe von zumindest annähernd kugelkappenförmigen Spanbrecherkörpern aufweist, zwischen denen konkave Spanleitflächen gebildet sind.

## Revendications

1. Plaquette de coupe indexable présentant deux bords de coupe parallèles (12, 14) formés au même niveau sur des côtés opposés d'un corps de plaquette indexable, entre lesquels une surface supérieure est munie d'une structure brise-copeaux formée par des protubérances et des cavités, caractérisée par le fait que, vues en section suivant un axe (M) parallèle aux bords de coupe, les protubérances (16) et les cavités (18) mutuellement alternées définissent une ligne ondulée continue (M), les crêtes (S) de cette ligne ondulée s'élevant au-dessus des bords de coupe (12, 14) et les creux étant au-dessous des bords de coupe (12, 14), et par le fait que, en section transversaie à l'axe (M), la surface supérieure présente des parties descendantes (20) de surface supérieure s'étendant vers l'intérieur depuis chaque partie de bord de coupe et qui, en s'élevant vers l'axe (M), fusionnent avec la structure brise-copeaux.

2. Plaquette de coupe indexable selon la revendication 1, caractérisée par le fait que, vue en section transversale à l'axe (M) et passant par la crête (S) d'une protubérance (14), la surface supérieure présente une partie de surface supérieure descendante plate (20) contiguë à la partie de plaquette indexable, puis, en continuant vers l'intérieur, une partie intermédiaire plate (24) qui reste globalement au même niveau, laquelle partie intermédiaire (24) fusionne avec une partie initiale montante arquée d'une protubérance (16).

3. Plaquette de coupe indexable selon la revendication 2, caractérisée par le fait que chaque partie montante arquée est constituée par une section d'arc circulaire concave et une section d'arc circulaire convexe qui lui est contiguë vers l'intérieur.

4. Plaquette de coupe indexable selon la revendication 3, caractérisée par le fait que la section d'arc circulaire concave possède un rayon (R₅) sensiblement plus grand que celui (R₆) de la section d'arc circulaire convexe.

5. Plaquette de coupe indexable selon la revendication 1, caractérisée par le fait que, considérée transversalement à l'axe (M) et sensiblement au milieu entre deux protubérances adjacentes (16), les parties de surface supérieure possèdent une partie de surface descendante plate (20), qui fusionne avec une partie de creux arquée qui descend jusqu'à un point le plus bas (T) puis remonte de nouveau.

6. Plaquette de coupe indexable selon la revendication 5, caractérisée par le fait que chaque partie de creux arquée comprend une section d'arc circulaire concave et une section d'arc circulaire convexe qui lui est contiguë vers l'intérieur.

7. Plaquette de coupe indexable selon la revendication 6, caractérisée par le fait que la section d'arc circulaire concave possède un rayon (R₂) sensiblement plus grand que celui (R₄) de la section d'arc circulaire convexe.

8. Plaquette de coupe indexable selon la revendication 1, caractérisée par le fait qu'un plat de bord de coupe montant (22) est formé entre chaque bord de coupe (12, 14) et une partie de surface supérieure descendante (20).

9. Plaquette de coupe indexable selon la revendication 1, caractérisée par le fait que la ligne ondulée continue est composée de sections d'arcs circulaires alternativement convexes et concaves.

10. Plaquette de coupe indexable selon la revendication 9, caractérisée par le fait que le rayon (R₇) des sections d'arcs circulaires convexes est à peu près 10% supérieur à celui (R₈) des sections d'arcs circulaires concaves.

11. Plaquette de coupe indexable selon la revendication 1, caractérisée par le fait que le plat de bord de coupe (22) présente un angle de dépouille (a) négatif d'à peu près 15°.

12. Plaquette de coupe indexable selon la revendication 1, caractérisée par le fait que le plat de bord de coupe (22) présente un arrondi circulaire pour fusionner avec la surface supérieure.

13. Plaquette de coupe indexable selon la revendication 12, caractérisée par le fait que la partie arrondie suivant un rayon circulaire présente un rayon (R₁) d'à peu près 0,8 mm.

14. Plaquette de coupe indexable selon la revendication 1, caractérisée par le fait que la partie de surface supérieure plate (20) présente un angle de dépouille (β) positif d'à peu près 14°.

15. Plaquette de coupe indexable selon la revendication 2, caractérisée par le fait que le point le plus bas (T) de la partie de surface descendante (20) est à peu près deux fois plus bas sous le niveau du bord de coupe (12, 14) que la partie intermédiaire plate (24).

16. Plaquette de coupe indexable selon la revendication 15, caractérisée par le fait que la crête de la partie de creux arquée s'étend à peu près jusqu'au niveau de la partie intermédiaire plate (24).

17. Plaquette de coupe indexable selon la revendication 5, caractérisée par le fait que les crêtes des lignes ondulées s'étendent, au-dessus du niveau du bord de coupe (12, 14), d'à peu près 33% de la profondeur (t) du point le plus bas (T) de la surface supérieure par rapport à ce niveau.

18. Plaquette de coupe indexable selon la revendication 1, caractérisée par le fait que la structure brise-copeaux possède une rangée de corps brise-copeaux au moins globalement en forme de calottes sphériques, ladite rangée étant placée parallèle aux bords de coupe et centrée sur l'axe (M), entre lesquels corps sont formées des surfaces concaves de guidage des copeaux.
